# EUROPÄISCHE PATENTANMELDUNG

(11) **EP 3 431 379 A1**
(43) Veröffentlichungstag der Anmeldung: **23.01.2019**
(21) Anmeldenummer: 18183961.4
(22) Anmeldetag: 17.07.2018
(51) Int. Cl.: B62M 6/90, B62J 11/02, B62K 19/40, B62K 19/46, B62K 3/00, B62K 19/42, B62J 99/00

(54) **FAHRRAD-, ZWEIRAD- ODER DREIRADRAHMEN**

(30) Priorität: 17.07.2017 DE 102017115999
(71) Anmelder: Bike-Sky.com e.K., 77791 Berghaupten (DE)
(72) Erfinder: Kaletta, Manuel, 77791 Berghaupten (DE)
(74) Vertreter: Mertzlufft-Paufler, Cornelius

(57) **Zusammenfassung**

Die Erfindung betrifft einen Fahrrad-, Zweirad- oder Dreiradrahmen mit zumindest einem Rohrabschnitt (1), der (1) wenigstens eine Einformung (2) oder Aussparung aufweist, die zur Aufnahme mindestens eines in die Einformung (2) oder Aussparung eingesetzten Gegenstandes bestimmt ist. Für den erfindungsgemäßen Fahrrad-, Zweirad- oder Dreiradrahmen ist kennzeichnend, dass die Einformung (2) oder Aussparung als ein Hohlraum im Rohrabschnitt (1) ausgebildet ist, der mit Ausnahme einer zum Außenumfang des Rohrabschnitts (1) hin offenen oder öffenbaren Einsetzöffnung (5) allseits geschlossen ist (vgl. Fig. 4).

## Beschreibung

Die Erfindung betrifft einen Fahrrad-, Zweirad- oder Dreiradrahmen mit zumindest einem Rohrabschnitt, der wenigstens eine Einformung oder Aussparung aufweist, die zur Aufnahme eines in die Einformung oder Aussparung eingesetzten Gegenstandes bestimmt ist.

Fahrräder und gegebenenfalls motorisierte Fahrräder werden häufig mit Werkzeug und Flickzeug sowie mit einer Fahrradpumpe ausgestattet. Während das Werk- und das Flickzeug meist in Rahmentaschen untergebracht ist, die sich deutlich vom Fahrrad abheben und auch für unberechtigte Dritte leicht sichtbar und zugänglich sind, werden die Fahrradpumpen am Rahmen lösbar befestigt, wo sie die Handhabung des Rades erschweren und leicht abfallen können.

E-Bikes und Pedelecs benötigen für den in diesen Zweirädern eingebauten elektromotorischen Antrieb ein Akku als elektrische Energiequelle. Dieser Akku ist gegebenenfalls noch zusätzlich am Rahmen oder im Bereich eines Hinterradgepäckträgers lösbar befestigt, wodurch zusätzlich das äußere Erscheinungsbild dieses Zweirades beeinträchtigt werden kann.

Aus der US 7,934,576 B2 kennt man bereits einen Fahrradrahmen, der an der Oberseite seines Unterrohrs eine in Längserstreckung des Unterrohrs orientierte Einformung hat, die als eine an die komplementäre Außenkontur eines Akkus formangepasste Querschnittsreduktion ausgestaltet ist. Da diese Einformung als Querschnittsreduktion des Unterrohrs ausgebildet ist, ist der vorbekannte Fahrradrahmen in diesem Bereich in seiner Stabilität deutlich geschwächt. Zudem ist der in die Einformung eingesetzte Akku trotz seiner komplementären Formgebung deutlich sichtbar und auch für unberechtigte Dritte leicht zugänglich. Darüber hinaus ist aufgrund der komplementären Formgebung der Einformung einerseits und des Akkus andererseits der Gegenstand nicht frei wählbar, der im Bereich der Einformung des vorbekannten Fahrradrahmens untergebracht werden soll.

Es besteht daher die Aufgabe, einen Fahrrad-, Zweirad- oder Dreiradrahmen der eingangs erwähnten Art zu schaffen, der die Unterbringung eines Akkus oder dergleichen Energiespeicher, von Werk- und Flickzeug, einer Fahrradpumpe oder sonstiger Gegenstände erlaubt, ohne dass dadurch die Handhabung des betreffenden Fahrrades, Zweirades oder Dreirades erschwert, dessen äußeres Erscheinungsbild beeinträchtigt und unberechtigte Dritte deutlich sichtbar zu Manipulationen angeregt werden.

Die erfindungsgemäße Lösung dieser Aufgabe besteht bei dem Fahrrad-, Zweirad- oder Dreiradrahmen der eingangs erwähnten Art insbesondere darin, dass die Einformung oder Aussparung als ein Hohlraum in dem zumindest einen Rohrabschnitt ausgebildet ist, welcher Hohlraum mit Ausnahme einer zum Außenumfang des Rohrabschnitts hin offenen oder öffenbaren Einsetzöffnung allseits geschlossen ist.

Der erfindungsgemäße Fahrrad-, Zweirad- oder Dreiradrahmen weist zumindest einen Rohrabschnitt auf, der wenigstens eine Einformung oder Aussparung hat, die zur Aufnahme mindestens eines in die Einformung oder Aussparung eingesetzten Gegenstandes bestimmt ist. In dieser Einformung oder Aussparung des zumindest einen Rohrabschnitts kann wenigstens ein Gegenstand mitgeführt werden, ohne dass dieser Gegenstand sich vom Fahrrad-, Zweirad- oder Dreiradrahmen deutlich sichtbar abhebt oder die Handhabung dieses Fahrzeugrahmens erschwert, wenn der Fahrrad-, Zweirad- oder Dreiradrahmen beispielsweise in dem zumindest einen Rohrabschnitt ergriffen wird. Erfindungsgemäß ist vorgesehen, dass die in dem zumindest einen Rohrabschnitt vorgesehene, wenigstens eine Einformung oder Aussparung als ein Hohlraum im Rohrabschnitt ausgebildet ist, der mit Ausnahme einer zum Außenumfang des Rohrabschnitts hin offenen oder öffenbaren Einsetzöffnung allseits geschlossen ist. Bei dem erfindungsgemäßen Fahrrad-, Zweirad- oder Dreiradrahmen ist die im zumindest einen Rohrabschnitt vorgesehene Einformung oder Aussparung somit als Hohlraum ausgebildet, der mit Ausnahme der Einsetzöffnung allseits geschlossen ist. In diesen Hohlraum kann der zu verwahrende Gegenstand eingesetzt werden. Da dieser Hohlraum nicht als Querschnittsreduktion der Außenkontur des zumindest einen Rohrabschnitts ausgebildet ist, wird eine empfindliche Schwächung der Stabilität des Fahrrad-, Zweirad- oder Dreiradrahmens im Bereich des zumindest einen Rohrabschnitts vermieden.

Dabei wird eine Ausführung gemäß der Erfindung bevorzugt, bei der die Einformung oder Aussparung zur vollständigen Aufnahme mindestens eines in die Einformung oder Aussparung eingesetzten Gegenstandes bestimmt ist. Da der betreffende Gegenstand somit vollständig in der als Hohlraum ausgebildeten Einformung oder Aussparung verschwindet, wird ein ansprechendes Erscheinungsbild des erfindungsgemäßen Fahrrad-, Zweirad- oder Dreiradrahmens noch zusätzlich begünstigt.

Die im erfindungsgemäßen Fahrrad-, Zweirad- oder Dreiradrahmen vorgesehene Einformung oder Aussparung bietet vergleichsweise viel Platz, ohne dass dadurch die Sichtbarkeit dieser Einformung oder Aussparung und des darin verwahrten Gegenstandes erhöht würde, wenn die Einformung oder Aussparung in ihrer Längserstreckung etwa achsparallel zur Längsachse des Rohrabschnitts orientiert ist.

Der zu verwahrende Gegenstand lässt sich sicher nahezu unsichtbar in der wenigstens einen Einformung oder Aussparung des erfindungsgemäßen Fahrrad-, Zweirad- oder Dreiradrahmens unterbringen, wenn die Einformung oder Aussparung an ihrer Einsetzöffnung mittels einem Deckel verschließbar ist.

Die hohe Stabilität des erfindungsgemäßen Fahrrad-, Zweirad- oder Dreiradrahmens auch im Bereich des zumindest einen Rohrabschnitts wird noch zusätzlich begünstigt, wenn diese Einformung oder Aussparung im Querschnitt als Einstülpung des Rohrabschnitts ausgebildet ist.

Zusätzlich oder stattdessen kann vorgesehen sein, dass zwischen der Außenwand / den Außenwänden des Rohrabschnitts und der Innenwand / den Innenwänden der Einformung oder Aussparung zumindest ein Hohlraum ausgebildet ist. Bei dieser Ausführungsform ist der erfindungsgemäße Fahrrad-, Zweirad- oder Dreiradrahmen auch im Bereich des zumindest einen Rohrabschnitts doppelwandig ausgebildet, weshalb sich der Fahrrad-, Zweirad- oder Dreiradrahmen auch in diesem Bereich durch eine hohe Stabilität auszeichnet.

Eine bevorzugte Weiterbildung gemäß der Erfindung, die sich durch die besonders hohe Stabilität des erfindungsgemäßen Fahrrad-, Zweirad- oder Dreiradrahmens auch im Bereich seines zumindest einen Rohrabschnitts auszeichnet, sieht vor, dass der zumindest eine Rohrabschnitt im Querschnitt etwa U-förmig ausgestaltet ist.

Eine besonders vorteilhafte Ausführungsform gemäß der Erfindung, für die eigenständiger Schutz beansprucht wird, sieht vor, dass die Einformung oder Aussparung mittels zumindest einer Trennwand unterteilbar ist, welche zumindest eine Trennwand in die Einformung oder Aussparung lösbar einsetzbar und vorzugsweise in der gewählten Einsetzposition fixierbar ist. Bei dieser Ausführungsform kann die als Hohlraum ausgebildete Einformung oder Aussparung in dem zumindest einen Rohrabschnitt des erfindungsgemäßen Fahrrad-, Zweirad- oder Dreiradrahmens durch mindestens eine Trennwand so unterteilt werden, dass beispielsweise in einer abgeteilten Kammer dieser Einformung oder Aussparung ein als Energiequelle benötigter Energiespeicher, beispielsweise eine Batterie oder ein Akku, untergebracht ist, während sich in der demgegenüber anderen abgeteilten Kammer der Einformung oder Aussparung beispielsweise das für den Reparaturfall benötigte Werkzeug oder Flickzeug befindet.

Die hohe Stabilität des erfindungsgemäßen Fahrzeugrahmens auch im Bereich seiner als Hohlraum ausgebildeten Einformung oder Aussparung wird noch begünstigt, wenn in die Einformung oder Aussparung mindestens ein Versteifungselement einsetzbar ist und wenn das mindestens eine Versteifungselement in der gewählten Einsetzposition fixierbar ist.

Dabei sieht eine konstruktiv besonders einfache und leicht herstellbare Ausführungsform gemäß der Erfindung vor, dass die zumindest eine Trennwand als Versteifungselement ausgebildet ist. Bei dieser Ausführungsform gemäß der Erfindung kann die zur Unterteilung der Einformung oder Aussparung verwendete Trennwand auch als Versteifungselement dienen, welches die Stabilität des erfindungsgemäßen Fahrzeugrahmens auch im Bereich des zumindest einen Rohrabschnitts erhöht.

Die vielseitige Verwendbarkeit des in dem zumindest einem Rohrabschnitt des erfindungsgemäßen Fahrrad-, Zweirad- oder Dreiradrahmens vorgesehenen Hohlraums wird noch erhöht, wenn die zumindest eine Trennwand und/oder das zumindest eine Versteifungselement in Längserstreckung der Einformung oder Aussparung vorzugsweise stufenlos verstellbar ist.

Eine bevorzugte Anwendung gemäß der Erfindung sieht vor, dass die Einformung oder Aussparung zumindest bereichsweise als Einbaufach für einen Energiespeicher, insbesondere für einen Akku, bestimmt ist, welcher Energiespeicher als Energiequelle für einen elektromotorischen Fahrrad- oder Zweiradantrieb dient.

Zusätzlich oder stattdessen kann es vorteilhaft sein, wenn die Einformung oder Aussparung zumindest bereichsweise als Stauraum für Werkzeug und/oder Flickzeug beziehungsweise für eine Fahrradpumpe ausgebildet ist.

Besonders vorteilhaft ist es, wenn der die Einformung oder Aussparung aufweisende Rohrabschnitt des erfindungsgemäßen Fahrrad-, Zweirad- oder Dreiradrahmens als Ober- oder als Unterrohr dieses Fahrzeugrahmens ausgebildet ist. Dabei wird die Handhabung erleichtert, wenn die Einsparung oder Ausformung am Ober- oder Unterrohr des Fahrrad-, Zweirad- oder Dreiradrahmens oberseitig angeordnet ist. Demgegenüber lässt sich die Einformung oder Aussparung besonders gut kaschieren, wenn diese Einformung oder Aussparung am Ober- oder Unterrohr des Fahrrad-, Zweirad- oder Dreiradrahmens unterseitig angeordnet ist.

Weiterbildungen gemäß der Erfindung ergeben sich aus der nachfolgenden Beschreibung bevorzugter Ausführungsbeispiele in Verbindung mit den Ansprüchen sowie der Beschreibung. Nachstehend wird die Erfindung anhand bevorzugter Ausführungsbeispiele noch näher beschrieben.

Es zeigt:
- Figur 1: einen beispielsweise als Ober- oder als Unterrohr eines Fahrrad-, Zweirad-, Dreirad- oder dergleichen Fahrzeugrahmens dienenden Rohrabschnitt, der eine zur Aufbewahrung beispielsweise eines Energiespeichers, insbesondere eines Akkus dienende Einformung aufweist, wobei diese Einformung hier als ein mit Ausnahme einer oberseitigen Einsetzöffnung allseits geschlossener Hohlraum ausgebildet sein soll,
- Figur 2: den Rohrabschnitt aus Figur 1 in einem Querschnitt,
- Figur 3: den Rohrabschnitt aus Figur 1 und 2 in einer perspektivischen Einzelteildarstellung, wobei diesem Rohrabschnitt mehrere, in seine Einformung lösbar einsetzbare Trennwände zugeordnet sind,
- Figur 4: den Rohrabschnitt aus den Figuren 1 bis 3 in einer Perspektivdarstellung, wobei in der Einformung dieses Rohrabschnitts die darin eingesetzten Trennwände zu erkennen sind,
- Figur 5: den Rohrabschnitt aus den Figuren 1 bis 4 mit den darin eingesetzten Trennwänden in einer perspektivischen Seitenansicht,
- Figur 6: den Rohrabschnitt aus den Figuren 1 bis 5 in einem Querschnitt mit Blick auf eine der in die Einformung eingesetzten Trennwände,
- Figur 7: den Rohrabschnitt aus den Figuren 1 bis 6 in einer Draufsicht mit Blick auf die Einformung und die darin eingesetzten Trennwände,
- Figur 8 bis Figur 11: verschiedene, dem Fahrrad-, Zweirad- oder Dreiradrahmen zugeordnete Elemente, die als Trennwand und/oder Versteifungselement in die im Rohrabschnitt vorgesehene Einformung oder Aussparung eingesetzt werden können,
- Figur 12 bis Figur 16: verschiedene, in ihrem Querschnitt unterschiedlich ausgestaltete Rohrabschnitte in einzelnen Querschnitten, und
- Figur 17: den gemäß den Figuren 1 bis 7 und 12 ausgebildeten Rohrabschnitt eines Fahrrad-, Zweirad- oder Dreiradrahmens mit den ihm zugeordneten Trennwänden und Versteifungselementen, wobei oberhalb dieser Bestandteile zwei Gehäuseformen für einen Akku oder für ein Transport- oder Ablagefach dargestellt sind.

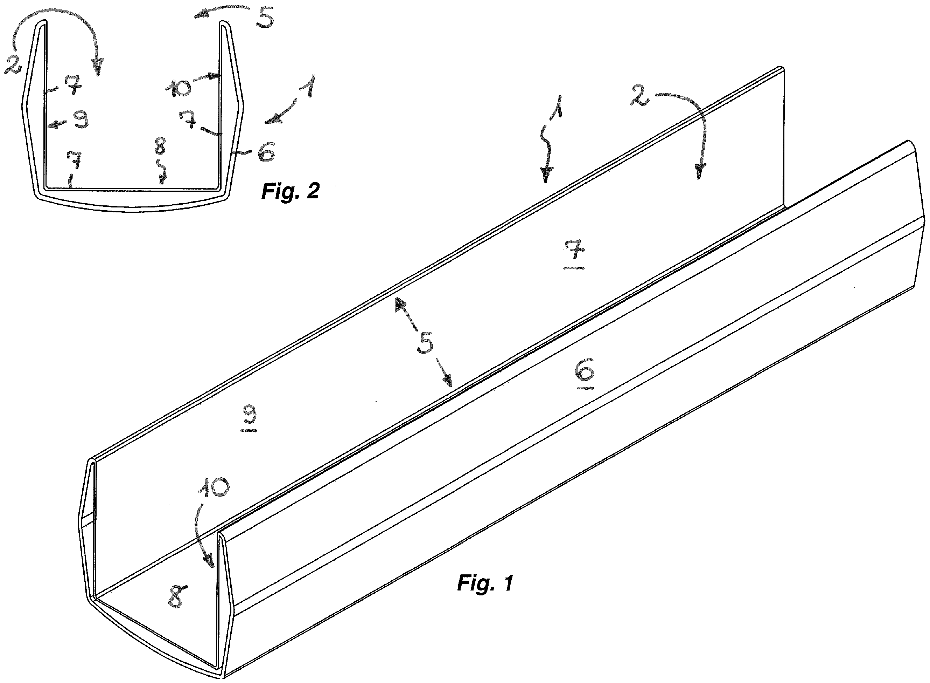

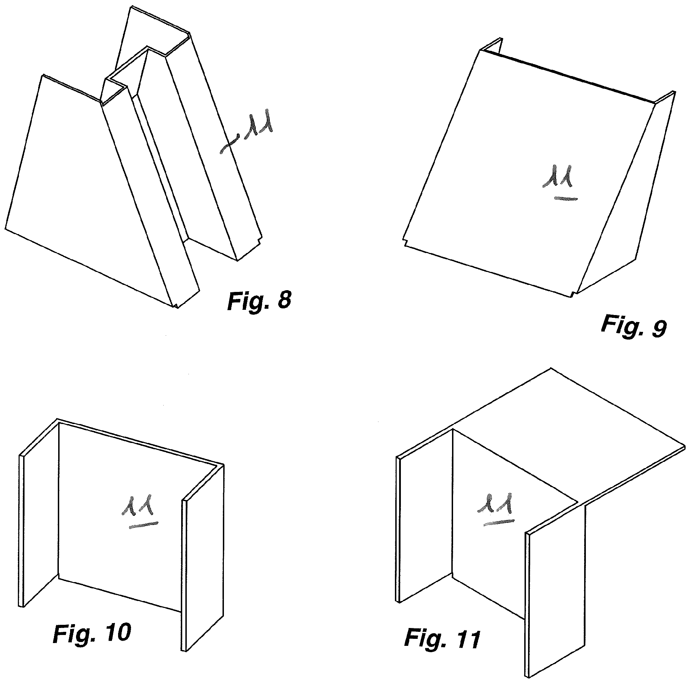

In den Figuren 1 bis 17 ist ein Rohrabschnitt 1 eines Fahrrad-, Zweirad- oder Dreiradrahmens dargestellt. Der insbesondere als Fahrrad- oder Zweiradrahmen ausgebildete Fahrzeugrahmen kann Bestandteil eines Herren- oder Damenfahrradrahmens sein und dort als Sattelrohr, Unterrohr oder gegebenenfalls auch als Oberrohr dienen. Der Rohrabschnitt 1 des hier ansonsten nicht weiter gezeigten und im Übrigen in üblicher Weise ausgestalteten Fahrrad-, Zweirad- oder Dreiradrahmens weist wenigstens eine Einformung 2 auf, die zur Aufnahme mindestens eines in die Einformung 2 einsetzbaren Gegenstandes bestimmt ist.

Der Gegenstand kann zumindest ein Werkzeug, ein Flickzeug, eine Fahrradpumpe oder als ein dem E-Bike oder Pedelec als Energiequelle dienender Energiespeicher, insbesondere ein Akku 3, 4 oder ein anderer Gegenstand, sein, den der Fahrer während einer Tour mit sich führen will.

Die im Rohrabschnitt 1 vorgesehene Einformung 2 ist hier als ein Hohlraum im Rohrabschnitt 1 ausgebildet, welcher Hohlraum mit Ausnahme einer zum Außenumfang des Rohrabschnitts 1 hin offene oder öffenbare Einsetzöffnung 5 allseits geschlossen ist.

Der Querschnitt des Rohrabschnitts 1 und die darin vorgesehene Einformung 2, die in ihrer Längserstreckung etwa achsparallel zur Längsachse des Rohrabschnitts 1 orientiert ist, ist so bemessen, dass der wenigstens eine, in die Einsetzöffnung 2 aufzunehmende Gegenstand darin vollständig verschwindet. Dabei kann die Einformung 2 mittels einem Deckel verschließbar sein, welcher Deckel an einer Schmal- oder Längsseite der Einformung 2 schwenkbar am Rohrabschnitt 1 gehalten und auf der der Schwenkachse gegenüberliegenden Längs- oder Schmalseite in einer Schließstellung sicherbar ist.

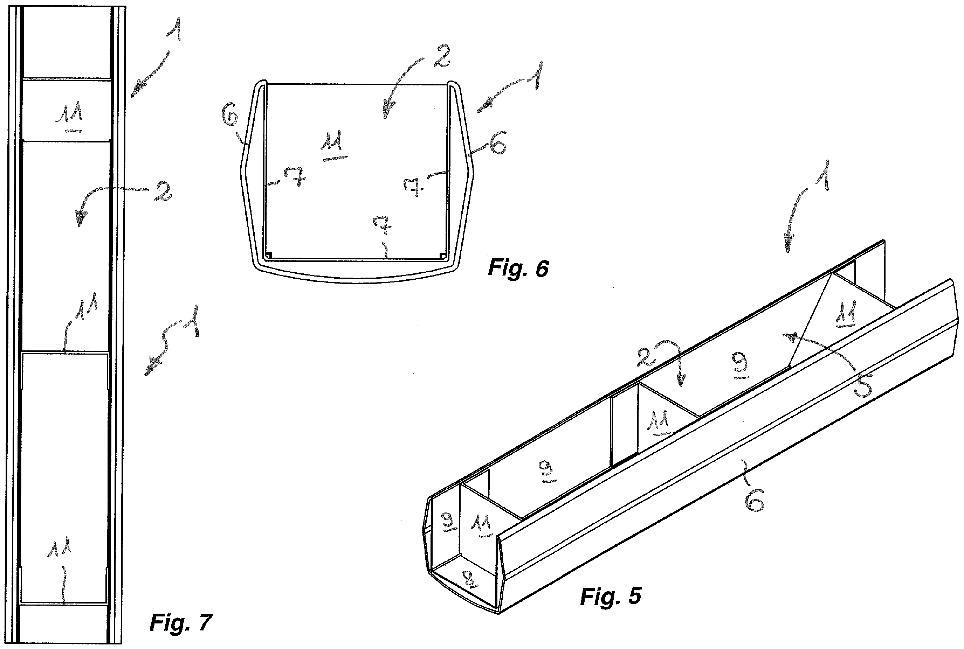

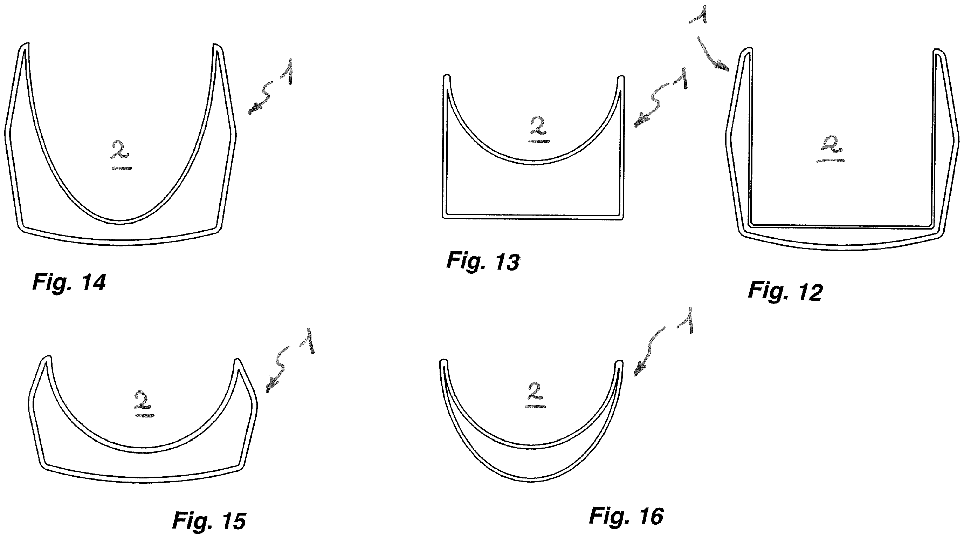

Aus einem Vergleich der Figuren 6 und 12 sowie 16 wird deutlich, dass die Einformung 2 im Querschnitt als eine Einstülpung des Rohrabschnitts 1 ausgebildet sein kann. Jedenfalls ist hier zwischen den Außenwänden 6 des Rohrabschnitts 1 und den Innenwänden 7 der Einformung 2 zumindest ein Hohlraum ausgebildet. Dazu kann der Rohrabschnitt 1 im Bereich der Einformung 2 etwa U-förmig ausgebildet werden. Wie Figur 12 zeigt, weist der hier dargestellte Rohrabschnitt 1 einen Grund 8 auf, an den sich im rechten Winkel angeordnete Längswände 9, 10 anschließen, welche die freien Schenkel der U-Form der Einformung 2 bilden. Der Grund 8 und die Längswände 9, 10 der im Rohrschnitt 1 ausgebildeten Einformung 2 können im Querschnitt etwa gleich lang ausgebildet sein.

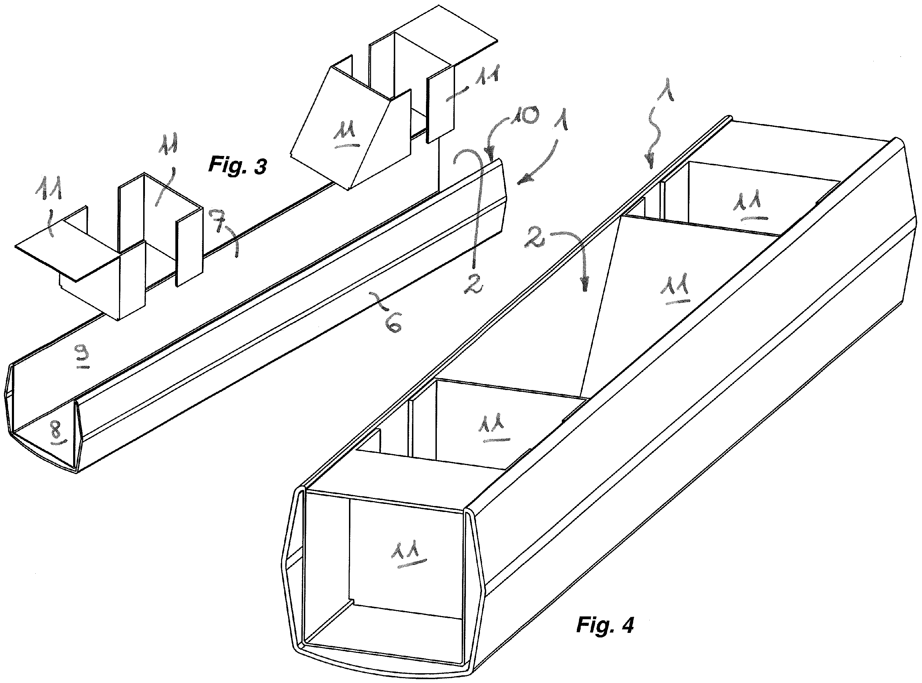

Aus einem Vergleich der Figuren 3 bis 11 und 17 wird deutlich, dass der als Einformung 2 ausgebildete Hohlraum im Rohrabschnitt 1 mittels, gegebenenfalls auch unterschiedlich ausgestalteten Trennwände 11 unterteilt werden kann, wenn beispielsweise zwischen, in unterschiedlichen Größen und Leistungen angebotenen Akkugehäusen 3, 4 eines Akkus ausgewählt werden kann oder über einen solchen Akku 3, 4 hinaus auch das benötigte Werkzeug oder Flickzeug sowie gegebenenfalls auch eine Fahrradpumpe verstaut werden soll. Die beispielsweise in den Figuren 3, 5 und 8 bis 11 in unterschiedlichen Ausführungen dargestellten Trennwände 11 sind in die Einformung 2 einsetzbar und dort vorzugsweise lösbar fixierbar. Dabei sieht eine bevorzugte Ausführung der Trennwände 11 vor, dass diese in der Einformung 2 in verschiedenen Einsetzpositionen vorzugsweise stufenlos fixierbar sind. Zusätzlich oder stattdessen können in die Einformung 2 auch verschiedene Versteifungselemente eingesetzt werden, welche Versteifungselemente insbesondere an den Längswänden 9, 10 der Einformung 1, 2 anliegen und den Rohrabschnitt 1 auch im Bereich dieser Einformung 2 stabilisieren.

Eine bevorzugte Ausführungsform gemäß der Erfindung sieht vor, dass die Trennwände 11 auch als Versteifungselement ausgebildet sind.

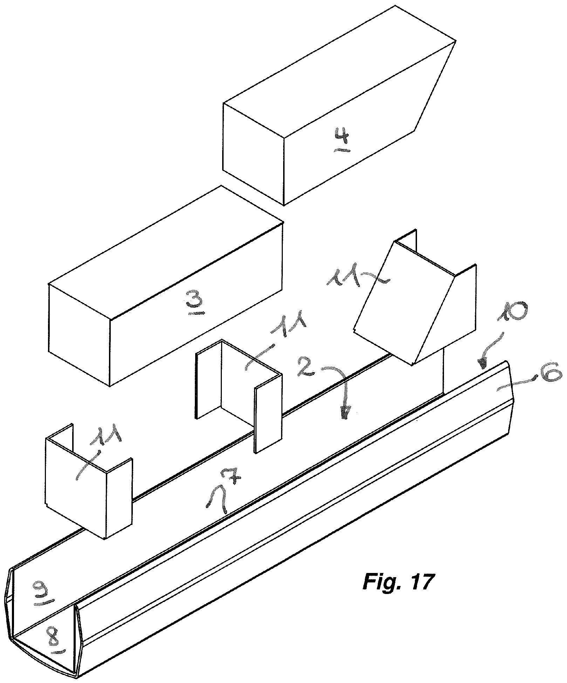

In Figur 17 ist angedeutet, dass die Einformung 2 als Batteriefach für einen Energiespeicher, insbesondere ein Akku 3, 4 und dessen Akkugehäuse, bestimmt sein kann, welcher Energiespeicher als Energiequelle für einen elektromotorischen Fahrrad-, Zweirad- oder Dreiradantrieb dient. Zusätzlich oder stattdessen kann die Einformung 2 auch als Stauraum für das im Reparaturfall benötigte Werkzeug oder Flickzeug, für eine Fahrradpumpe oder dergleichen Gegenstände dienen. Die gegebenenfalls auch als Versteifungselement dienenden Trennwände können auch zu mehreren in die Einformung 2 eingesetzt sein, um die Einformung 2 im Rohrabschnitt 1 bei Bedarf auch in mehrere Ablagefächer zu unterteilen. Die Trennwände 11 sind in der Einformung 2 lösbar fixierbar, so dass nach Entfernung der Trennwände 11 auch ein durchgehend freier Hohlraum zur Verfügung steht.

In den Querschnitten gemäß den Figuren 12 bis 16 ist dargestellt, dass der im Querschnitt U-förmige Rohrabschnitt 1 auch unterschiedliche Querschnittsformen aufweisen kann. Der Rohrabschnitt 1 ist jedoch in der Regel U-förmig ausgebildet, wobei die Innen- und Außenwände des Rohrabschnitts 1 im Bereich der Einformung 2 unter Bildung einer Hohlkammer doppelwandig ausgebildet sind.

### Bezugszeichenliste

- 1: Rohrabschnitt
- 2: Einformung
- 3: Akku / Akkugehäuse
- 4: Akku / Akkugehäuse
- 5: Einsetzöffnung
- 6: Außenwand des Rohrabschnitts 1
- 7: Innenwände der Einformung 2
- 8: Grund der Einformung 2
- 9: erste Längswand der Einformung 2
- 10: zweite Längswand der Einformung 2
- 11: Trennwand

## Patentansprüche

1. Fahrrad-, Zweirad- oder Dreiradrahmen mit zumindest einem Rohrabschnitt (1), der (1) wenigstens eine Einformung (2) oder Aussparung aufweist, die zur Aufnahme mindestens eines in die Einformung (2) oder Aussparung eingesetzten Gegenstandes bestimmt ist, **dadurch gekennzeichnet, dass** die Einformung (2) oder Aussparung als ein Hohlraum im Rohrabschnitt (1) ausgebildet ist, der mit Ausnahme einer zum Außenumfang des Rohrabschnitts (1) hin offenen oder öffenbaren Einsetzöffnung (5) allseits geschlossen ist.

2. Fahrrad-, Zweirad- oder Dreiradrahmen nach Anspruch 1, **dadurch gekennzeichnet, dass** die Einformung (2) oder Aussparung zur vollständigen Aufnahme mindestens eines in die Einformung (2) oder Aussparung eingesetzten Gegenstandes bestimmt ist.

3. Fahrrad-, Zweirad- oder Dreiradrahmen nach Anspruch 1 oder 2, **dadurch gekennzeichnet, dass** die Einformung (2) oder Aussparung in ihrer Längserstreckung etwa achsparallel zur Längsachse des Rohrabschnitts (1) orientiert ist.

4. Fahrrad-, Zweirad- oder Dreiradrahmen nach einem der vorstehenden Ansprüche, **dadurch gekennzeichnet, dass** die Einformung (2) oder Aussparung an ihrer Einsetzöffnung (5) mittels einem Deckel verschließbar ist.

5. Fahrrad-, Zweirad- oder Dreiradrahmen nach einem der vorstehenden Ansprüche, **dadurch gekennzeichnet, dass** die Einformung (2) oder Aussparung im Querschnitt als Einstülpung des Rohrabschnitts (1) ausgebildet ist.

6. Fahrrad-, Zweirad- oder Dreiradrahmen nach einem der Ansprüche 1 bis 5, **dadurch gekennzeichnet, dass** zwischen der Außenwand / den Außenwänden (6) des Rohrabschnitts (1) und der Innenwand / den Innenwänden (7) der Einformung (2) oder Aussparung zumindest ein Hohlraum oder eine Hohlkammer ausgebildet ist.

7. Fahrrad-, Zweirad- oder Dreiradrahmen nach einem der Ansprüche 1 bis 6, **dadurch gekennzeichnet, dass** der Rohrabschnitt (1) im Querschnitt etwa U-förmig ausgestaltet ist.

8. Fahrrad-, Zweirad- oder Dreiradrahmen nach einem der Ansprüche 1 bis 7, **dadurch gekennzeichnet, dass** die Einformung (2) oder Aussparung mittels zumindest einer Trennwand (11) unterteilbar ist, welche zumindest eine Trennwand (11) in die Einformung (2) oder Aussparung lösbar einsetzbar und vorzugsweise in einer Einsetzposition fixierbar ist.

9. Fahrrad-, Zweirad- oder Dreiradrahmen nach einem der Ansprüche 1 bis 8, **dadurch gekennzeichnet, dass** in die Einformung (2) oder Aussparung mindestens ein Versteifungselement einsetzbar ist und vorzugsweise in einer Einsetzposition fixierbar ist.

10. Fahrrad-, Zweirad- oder Dreiradrahmen nach Anspruch 9, **dadurch gekennzeichnet, dass** die zumindest eine Trennwand (11) als Versteifungselement ausgebildet ist.

11. Fahrrad-, Zweirad- oder Dreiradrahmen nach einem der vorstehenden Ansprüche, **dadurch gekennzeichnet, dass** die zumindest eine Trennwand (11) und/oder das zumindest eine Versteifungselement in Längserstreckung der Einformung (2) oder Aussparung vorzugsweise stufenlos verstellbar ist.

12. Fahrrad-, Zweirad- oder Dreiradrahmen nach einem der Ansprüche 1 bis 11, **dadurch gekennzeichnet, dass** die Einformung (2) oder Aussparung zumindest bereichsweise als Ablage- oder Einsetzfach für einen Energiespeicher, insbesondere einen Akku, bestimmt ist, welcher Energiespeicher als Energiequelle für einen elektromotorischen Fahrrad-, Zweirad- oder Dreiradantrieb dient.

13. Fahrrad-, Zweirad- oder Dreiradrahmen nach einem der Ansprüche 1 bis 12, **dadurch gekennzeichnet, dass** die Einformung (2) oder Aussparung zumindest bereichsweise als Stauraum für Werkzeug und/oder Flickzeug sowie gegebenenfalls für eine Fahrradpumpe ausgebildet ist.
